Europäisches Patentamt

European Patent Office

Office européen des brevets

(19)

(11) Veröffentlichungsnummer: **0 206 188 B1**

(12) **EUROPÄISCHE PATENTSCHRIFT**

(45) Veröffentlichungstag der Patentschrift: 29.05.91

(51) Int. Cl.⁵: **H04B 3/03**

(21) Anmeldenummer: **86108167.7**

(22) Anmeldetag: **14.06.86**

(54) **Einrichtung zur Anpassung einer in einer Fernmeldeleitung angeordneten bidirektionalen Verstärkerschaltung an die Fernmeldeleitung.**

(30) Priorität: **21.06.85 DE 3522238**

(43) Veröffentlichungstag der Anmeldung:
**30.12.86 Patentblatt 86/52**

(45) Bekanntmachung des Hinweises auf die
Patenterteilung:
**29.05.91 Patentblatt 91/22**

(84) Benannte Vertragsstaaten:
**AT BE CH DE FR GB IT LI LU NL SE**

(56) Entgegenhaltungen:
**EP-A- 0 155 569**
**GB-A- 2 139 055**
**US-A- 3 982 080**
**US-A- 4 278 848**

(73) Patentinhaber: **Neumann Elektronik GmbH**
**Bülowstrasse 104 - 110**
**W-4330 Mülheim 1(DE)**

(72) Erfinder: **Neumann, Dirk, Dipl.-Ing.**
**Schemelsbruch 11**
**W-4330 Mülheim 1(DE)**

(74) Vertreter: **Feder, Heinz, Dr. et al**
**Dominikanerstrasse 37**
**W-4000 Düsseldorf 11(DE)**

## Beschreibung

Die Erfindung betrifft eine Einrichtung zur Anpassung einer in einer Fernmeldeleitung angeordneten bidirektionalen Verstärkerschaltung an die Fernmeldeleitung, bei der für die beiden Sprechrichtungen getrennte, in einer Gabelverstärkerschaltung angeordnete Verstärker vorgesehen sind, wobei die Gabelschaltungen jeweils mit einem Nachbildungsnetzwerk abgeschlossen sind, das derart ausgestaltet ist, daß die Gabelübergangsdämpfung jeder Gabelschaltung erhöht wird, indem das Nachbildungsnetzwerk eine Schaltung enthält, deren Impedanz dem Wert der Impedanz des der Gabelschaltung am nächsten liegenden Ortsleitungsübertragers in der Fernmeldeleitung entspricht.

Eine derartige Einrichtung ist in der älteren Anmeldung Nr. 85 102 299.6 (Veröffentlichungsnummer EP-A- 0 155 569, VERÖFFENTLICHUNGSTAG:25.09.85) beschrieben.

Es hat sich herausgestellt, daß bei der Anpassung einer bidirektionalen Verstärkerschaltung an die Fernmeldeleitung, vor allem bei Anruf-Weiterschaltungen, große Schwierigkeiten auftreten, wenn in dem zum angerufenenTeilnehmer führenden Zweig der Fernmeldeleitung eine Sperrschaltung für über die Fernmeldeleitung geführte Gebührenzählimpulse angeordnet ist. Diese Gebührenzählimpulse besitzen bekanntlich eine Frequenz von 16 KHz. Sie werden bei Anruf-Weiterschaltungen in die Fernmeldeleitung eingespeist und dem Gebührenzähler des angerufenen Teilnehmers zugeführt. Durch die Sperrschaltungen wird verhindert, daß diese 16-KHz-Impulse in die bidirektionale Verstärkerschaltung gelangen.

Wenn nun die Anpassung der Gabelschaltungen an die Fernmeldeleitung mit Hilfe von Verfahren erfolgt, bei denen im Nachbildungsnetzwerk angeordnete einstellbare ohmsche Widerstände und Kondensatoren systematisch verändert werden bis eine optimale Anpassung erreicht ist, so bewirkt die in der Fernmeldeleitung angeordnete Sperrschaltung, die im allgemeinen Induktivitäten, beispielsweise einen Übertrager enthält, daß eine optimale Anpassung durch Einstellung an den ohmschen Widerständen und den Kondensatoren im Nachbildungsnetzwerk nicht zu erreichen ist.

Eine Ergänzung des Nachbildungsnetzwerkes durch einstellbare Induktivitäten würde den Aufwand bei der Durchführung des Anpassungsverfahrens unangemessen erhöhen und die zur Anpassung benötigte Zeit vervielfachen.

Die der Erfindung zugrunde liegende Aufgabe bestand darin, die Einrichtung nach der älteren Anmeldung so zu verbessern, daß eine optimale Anpassung in kurzer Zeit möglich wird, ohne daß das Nachbildungsnetzwerk etwa einstellbare Induktivitäten enthalten muß, die beim Anpassungsverfahren zu berücksichtigen wären.

Die Lösung dieser Aufgabe geschieht erfindungsgemäß mit den Merkmalen aus dem kennzeichnenden Teil des Patentanspruchs 1.

Vorteilhafte Ausführungsformen der Einrichtung nach der Erfindung sind in den Unteransprüchen beschrieben.

Die Erfindung geht von der an die ältere europäische Anmeldung anknüpfenden Erkenntnis aus, daß eine optimale Anpassung der Gabelschaltung an die Fernmeldeleitung lediglich durch Verändern von einstellbaren Kondensatoren und ohmschen Widerständen möglich ist, wenn bestimmte klar erfaßbare Eigenschaften der Fernmeldeleitung, die auf Induktivitäten zurückzuführen sind und den Eingangsscheinwiderstand besonders stark beeinflussen, bei der Ausbildung des Nachbildungsnetzwerkes berücksichtigt werden. Da es sich sowohl beim Ortsleitungsübertrager als auch bei den erwähnten Sperrschaltungen um Schaltungen handelt, die genau vorgegebene Induktivitäten besitzen, ist es möglich, diese Einflüsse im Nachbildungsnetzwerk durch fest vorgegebene Induktivitäten zu berücksichtigen. Es brauchen dann bei der Durchführung eines Anpassungsverfahrens lediglich die im Nachbildungsnetzwerk angeordneten einstellbaren Kondensatoren und ohmschen Widerstände verändert zu werden bis ein Optimum erreicht ist.

Wie bei der älteren Anmeldung so ist auch bei der vorliegenden Erfindung die Realisation der das Nachbildungsnetzwerk bildenden Schaltung in verschiedener Weise möglich. So kann beispielsweise das Nachbildungsnetzwerk außer einem Übertrager, der vom Typ her mit dem in der Fernmeldeleitung angeordneten Ortsleitungsübertrager noch einen zweiten Übertrager enthalten, der dem in der Sperrschaltung vorhandenen Übertrager entspricht. Das Nachbildungs-netzwerk kann aber auch eine erste Schaltung enthalten,die in ihren Eigenschaften dem Ortsleitungsübertrager entspricht und eine zweite Schaltung, die in ihren Eigenschaften der Sperrschaltung entspricht. Die erforderliche Induktivität kann dabei jeweils durch Drosseln oder aber auch durch eine aktive Schaltung, z.B. einen Gyrator, erzeugt werden.

Es hat sich gezeigt, daß bei der erfindungsgemäßen Einrichtung Anpassungsverfahren verwendet werden können, wie sie z.B. in der älteren Anmeldung Nr. 85 102 300.2 (Veröffentlichungsnummer 0 155 570) beschrieben sind. Es wird dabei die maximale Gabelübergangsdämpfung bestimmt, indem dem einen Nebenzweig der Gabelschaltung ein Prüfsignal mit konstantem Signalpegel zugeführt wird und jeweils festgestellt wird, welcher Anteil des zugeführten Signalpegels in Abhängigkeit von der Gabelübergangsdämpfung in den anderen Nebenzweig der Gabelschaltung übertritt. Vor jeder dieser Messungen wird der Impedanzwert des Nachbildungsnetzwerkes mikroprozessorgesteuert in vorgegebener Weise verändert, indem im Nachbildungsnetzwerk angeordnete, einander parallelgeschaltete ohmsche Widerstände und Kondensatoren über steuerbare Schaltelemente zu- oder abgeschaltet werden. Bei einem Nachbildungsnetzwerk, das vier Widerstände und vier Kondensatoren enthält, die einander parallelgeschaltet sind, können somit 256 verschiedene Impedanzwerte eingestellt und zur Optimalisierung der Anpassung der Gabelschaltung verwendet werden. Diese 256 verschiedenen Werte für das Nachbildungsnetzwerk können mikroprozessorgesteuert in etwa 5 Sekunden durchgeprüft werden.

Wollte man das Nachbildungsnetzwerk beispielsweise dadurch ergänzen, daß zur besseren Anpassung auf die Induktivitätswerte der Leitung zusätzlich noch vier ansteuerbare Induktivitäten hinzugefügt werden, so würde die Anzahl der durchzuprüfenden Werte auf 4096 ansteigen und somit nicht mehr 5 Sekunden, sondern 80 Sekunden für die Durchführung des Anpassungsverfahrens benötigt werden.

Im folgenden wird anhand der beigefügten Zeichnungen ein Ausführungsbeispiel für eine Einrichtung nach der Erfindung näher erläutert.

In den Zeichnungen zeigen:

Fig. 1 in einem Prinzipschaltbild eine in einer Fernmeldeleitung angeordnete bidirektionale Verstärkerschaltung;

Fig. 2 in einem Detailschaltbild die in die Fernmeldeleitung eingeschaltete Sperrschaltung;

Fig. 3 in einem Detailschaltbild den in die Fernmeldeleitung eingeschalteten Ortsleitungsübertrager;

Fig. 4 in einem Detailschaltbild das an die Gabelschaltung angeschlossene Nachbildungsnetzwerk.

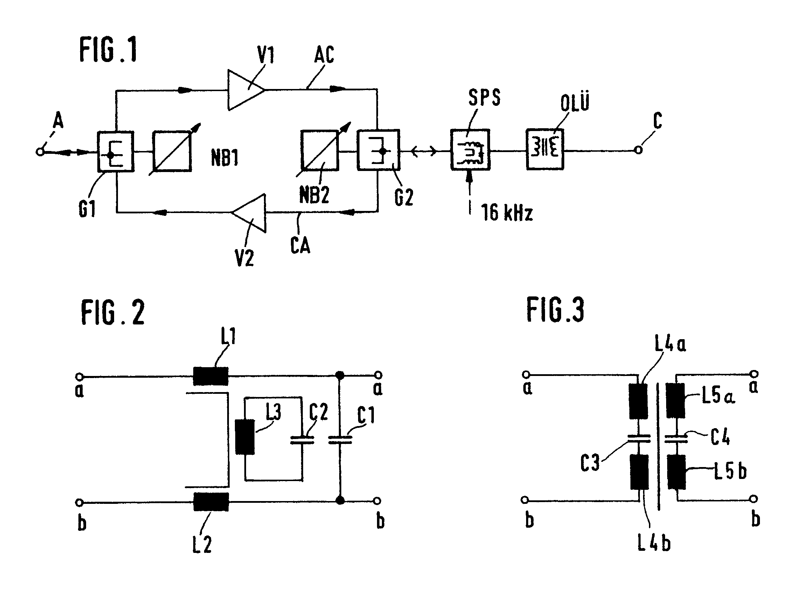

Die Einrichtung nach Fig. 1 besteht aus einer Gabelverstärkerschaltung mit den Gabelschaltungen G1 und G2 und dem von einem Teilnehmer A zu einem Teilnehmer C führenden Zweig AC und einem vom Teilnehmer C zum Teilnehmer A führenden Zweig CA einer Fernmeldeleitung. Im Zweig AC ist ein Verstärker V1 und im Zweig CA ein Verstärker V2 vorgesehen. Die Gabelschaltungen G1 und G2 können in bekannter Weise aufgebaut sein. Zwischen dem Teilnehmer C, der im vorliegenden Beispiel der über eine Anruf-Weiterschaltung angerufene Teilnehmer sein soll und der Gabelschaltung G2 ist ein Ortsleitungsübertrager OLÜ in die Fernmeldeleitung eingeschaltet. Weiterhin enthält dieser Zweig der Fernmeldeleitung eine Sperrschaltung SPS, durch welche verhindert wird, daß Gebührenzählimpulse mit der Frequenz 16 KHz zurück auf die bidirektionale Verstärkerschaltung gelangen.

Die Gabelschaltung G2 ist durch ein Nachbildungsnetzwerk NB2 abgeschlossen, das im folgenden näher erläutert wird.

Die Gabelschaltung G1 ist durch ein Nachbildungsnetzwerk NB1 abgeschlossen, das im folgenden nicht näher erläutert wird, aber grundsätzlich genauso ausgebildet sein kann, wie das Nachbildungsnetzwerk NB2.

Der Aufbau des Ortsleitungsübertragers OLÜ ist in Fig. 3 dargestellt. Er besteht aus den Wicklungen L4a-L4b bzw. L5a-L5b mit zwischengeschalteten Kondensatoren C3 bzw. C4.

Die Sperrschaltung ist in Fig. 2 dargestellt. Sie besteht aus den Wicklungen L1, L2 und L3 und den Kondensatoren C1 und C2. Aufbau und Wirkungsweise dieser Schaltungen sind bekannt.

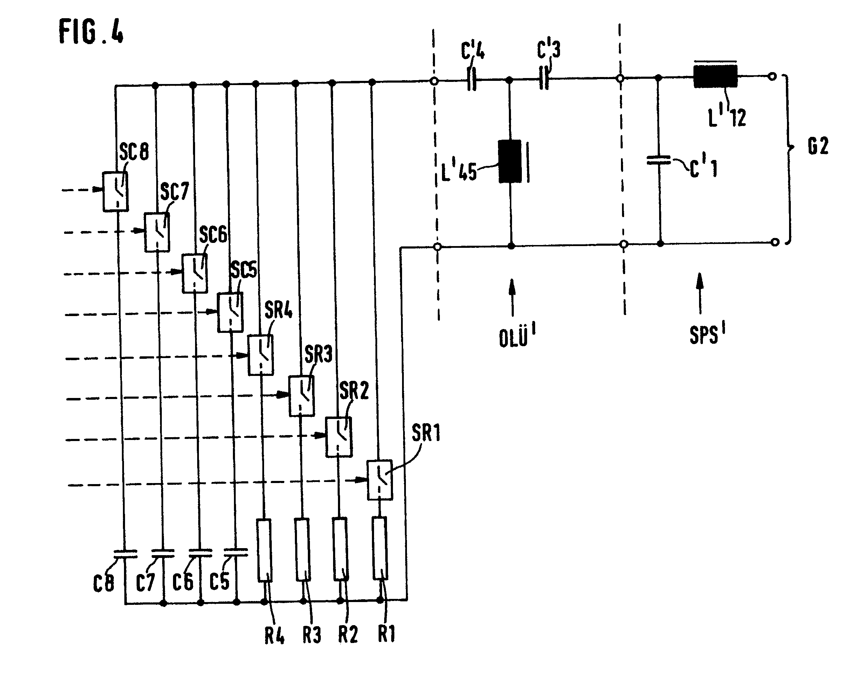

Das an die Gabelschaltung G2 angeschlossene Nachbildungsnetzwerk NB2 ist in Fig. 4 dargestellt. Es besteht grundsätzlich aus drei unterschiedlichen Schaltungsteilen. Ein erster Schaltungsteil SPS' entspricht einer Äquivalenzschaltung für die in Fig. 2 dargestellte Sperrschaltung, ein zweiter Schaltungsteil OLÜ' entspricht einer Äquivalenzschaltung für den in Fig. 3 dargestellten Ortsleitungsübertrager OLÜ und ein dritter Schaltungsteil enthält die für die Durchführung eines Anpassungsverfahrens benötigten ansteuerbaren, lediglich aus RC-Gliedern aufgebauten Impedanzen.

Der Schaltungsteil SPS' besitzt eine Drossel L'12, deren Induktivitätswert dem vierfachen Wert einer der in Fig. 2 dargestellten Wicklungen L1 bzw. L2, deren Induktivitätswert gleich ist, beträgt. In Serie zur Drossel L'12 befindet sich der Kondensator C'1.

Der Schaltungsteil OLÜ' enthält eine weitere Drossel L'45, der in Serie ein Kondensator C'3 vorgeschaltet ist. Parallel zur Drossel L'45 ist ein weiterer Kondensator C'4 in Serie mit dem aus parallelgeschalteten ohmschen Widerständen R1 bis R4 und C5 bis Ca bestehenden Netzwerk geschaltet.

In den Zuführungsleitungen zu den parallelgeschalteten Widerständen R1 bis R4 und Kondensatoren C5 bis C8 sind Schaltelemente SR1 bis SR4 und SC5 bis SC8 angeordnet. Diese Schaltelemente können grundsätzlich von Hand einstellbare Schalter sein, mit denen jeweils die Widerstände R1 bis R4 und die Kondensatoren C5 bis C8 zugeschaltet oder abgeschaltet werden können. Auf diese Weise läßt sich das Nachbildungsnetzwerk von Hand einstellen, wenn auf irgendeine andere Weise der optimale Wert der einzustellenden Impedanz bestimmt worden ist. Dies kann beispielsweise mit Einrichtungen geschehen, wie sie in der älteren Anmeldung Nr. 85 102 301.0 (Veröffentlichungsnummer 0 155 571) beschrieben sind.

Es können hier aber auch ansteuerbare Schaltelemente verwendet werden, die von einer nicht dargestellten, einen Mikroprozessor enthaltenden Steuerschaltung her ein- und ausschaltbar sind. Mit dieser Steuerschaltung kann dann auch eine Einrichtung angesteuert werden zur Durchführung eines automatischen Anpassungsverfahrens der Gabelschaltung, wie es beispielsweise in der älteren Anmeldung Nr. 85 102 300.2 beschrieben ist.

## Ansprüche

1. Einrichtung zur Anpassung einer in einer Fernmeldeleitung angeordneten bidirektionalen Verstärkerschaltung an die Fernmeldeleitung, bei der für die beiden Sprechrichtungen getrennte, in einer Gabelverstärkerschaltung angeordnete Verstärker (V1, V2) vorgesehen sind, wobei die Gabelschaltungen (G1, G2) jeweils mit einem Nachbildungsnetzwerk (NB1, NB2) abgeschlossen sind, das derart ausgestaltet ist, daß die Gabelübergangsdämpfung jeder Gabelschaltung erhöht wird, indem das Nachbildungsnetzwerk eine Schaltung enthält, deren Impedanz dem Wert der Impedanz des der Gabelschaltung am nächsten liegenden Ortsleitungsübertragers (OLÜ) in der Fernmeldeleitung entspricht, dadurch gekennzeichnet, daß bei mindestens einer der Gabelschaltungen (G2) das Nachbildungsnetzwerk (NB2) zusätzlich eine Schaltung (L'12-C'1) enthält, deren fest vorgegebene Impedanz dem Wert der Impedanz einer Induktivitäten enthaltenden in der an diese Gabelschaltung (G2) angeschlossenen Fernmeldeleitung (a, b) angeordneten Sperrschaltung (SPS) für über die Fernmeldeleitung geleitete Gebührenzählimpulse entspricht.

2. Einrichtung nach Anspruch 1, bei der die Sperrschaltung einen Übertrager enthält, dadurch gekennzeichnet, daß das Nachbildungsnetzwerk (NB2) zusätzlich einen Übertrager enthält, der die gleiche Bauart und insbesondere die gleiche Induktivität besitzt wie der in der Sperrschaltung angeordnete Übertrager und dessen Primärwicklung an die Gabelschaltung (G2) angeschlossen ist, während an die Sekundärwicklung weitere, das Nachbildungsnetzwerk (NB2) aufbauende Schaltungen angeschlossen sind.

3. Einrichtung nach Anspruch 1, bei der die Sperrschaltung einen Übertrager enthält, dadurch gekennzeichnet, daß das Nachbildungsnetzwerk (NB2) eine erste Drossel (L'45) enthält, deren Induktivität der Induktivität des der Gabelschaltung am nächsten liegenden Ortsleitungsübertragers (OLÜ) entspricht, wobei in Serie zur Drossel (L'45) ein Kondensator (C'3) und parallel zur Drossel (L'45) ein weiterer Kondensator (C'4) in Serie mit einem aus ohmschen Widerständen (R1 bis R4) und Kondensatoren (C5 bis C8) aufgebauten Netzwerk geschaltet ist und in Serie zur ersten Drossel (L'45) eine zweite Drossel (L'12) geschaltet ist, deren Induktivität der Induktivität des in der Sperrschaltung (SP1) angeordneten Übertragers entspricht.

4. Einrichtung nach Anspruch 3, dadurch gekennzeichnet, daß mindestens ein Teil der das Netzwerk aufbauenden ohmschen Widerstände (R1 bis R4) und Kondensatoren (C5 bis C8) einstellbar sind.

## Claims

1. Device for adapting a bidirectional amplifier circuit, arranged in a telecommunication line, to the telecommunication line, in which separate amplifiers (V1, V2) arranged in a hybrid amplifier circuit are provided for the two directions of speech transmission, the hybrid circuits (G1, G2) in each case being terminated by means of a balancing network (NB1, NB2) which is designed in such a manner that the transhybrid loss of each hybrid circuit is increased because the balancing network contains a circuit the impedance of which corresponds to the value of the impedance of the local line transformer (OLÜ) closest to the hybrid circuit in the telecommunication line, characterised in that in at least one of the hybrid circuits (G2), the balancing network (NB2) additionally contains a circuit (L'12-C'1) the predetermined impedance of which corresponds to the value of the impedance of a rejection circuit (SPS) for charge metering pulses conducted via the telecommunication line which contains inductances and which is arranged in the telecommunication line (a, b) connected to this hybrid circuit (G2).

2. Device according to Claim 1, in which the rejection circuit contains a transformer, characterised in that the balancing network (NB2) additionally contains a transformer which has the same type of construction and, in particular, the same inductance as the transformer arranged in the rejection circuit and the primary winding of which is connected to the hybrid circuit (G2), whilst the secondary winding is connected to further circuits building up the balancing network (NB2).

3. Device according to Claim 1, in which the rejection circuit contains a transformer, characterised in that the balancing network (NB2) contains a first choke (L'45) the inductance of which corresponds to the inductance of the local line transformer (OLÜ) closest to the hybrid circuit, a capacitor (C'3) being connected in series with the choke (L'45) and a further capacitor (C'4) in series with a network built up with ohmic resistances (R1 to R4) and capacitors (C5 to C8) being connected in parallel with the choke (L'45) and a second choke (L'12) being connected in series with the first choke (L'45), the inductance of which corresponds to the inductance of the transformer arranged in the rejection circuit (SP1).

4. Device according to Claim 3, characterised in that at least a part of the ohmic resistors (R1 to R4) and capacitors (C5 to C8) building up the network are adjustable.

## Revendications

1. Dispositif pour l'adaptation à la ligne de télécommunication d'un circuit amplificateur bidirectionnel monté dans cette ligne, dispositif dans lequel sont prévus des amplificateurs (V1, V2) distincts pour les deux directions conversationnelles et disposés dans un circuit amplificateur à fourche, les circuits en fourche (G1, G2) étant connectés respectivement à un réseau équilibreur (NB1, NB2) qui est réalisé de telle sorte que l'amortissement transitoire de chaque circuit en fourche se trouve accru du fait que le réseau équilibreur contient un circuit dont l'impédance correspond à la valeur de l'impédance du transmetteur de la ligne locale (OLU) le plus proche du circuit en fourche dans la ligne de télécommunication, caractérisé par le fait que sur au moins l'un des circuits en fourche (G2) le réseau équilibreur (NB2) contient un circuit supplémentaire (L'12-C'1) dont l'impédance prédéterminée correspond à la valeur de l'impédance d'un circuit de blocage (SPS) contenant des inductances disposées dans la ligne de télécommunication (a, b) connectée sur ce circuit en fourche (G2), ce circuit de blocage (SPS) étant destiné aux impulsions de comptage de taxation transmises par ladite ligne de télécommunication.

2. Dispositif selon la revendication 1, qui prévoit que le circuit de blocage contient un transmetteur, caractérisé par le fait que le réseau équilibreur (NB2) contient de manière complémentaire un transmetteur dont le mode de réalisation et en particulier l'inductance sont identiques à ceux du transmetteur disposé dans le circuit de blocage et dont l'enroulement primaire est raccordé au circuit en fourche (G2), tandis qu'à l'enroulement secondaire sont raccordés d'autres circuits constituant le réseau équilibreur (NB2).

3. Dispositif selon la revendication 1, qui prévoit que le circuit de blocage contient un transmetteur, caractérisé par le fait que le réseau équilibreur (NB2) contient une première bobine de self (L'45) dont l'inductance correspond à l'inductance du transmetteur (OLU) de la ligne locale le plus proche du circuit en fourche, un condensateur (C'3) étant monté en série avec la bobine de self (L'54) et parallèlement à ladite bobine de self (L'45) un autre condensateur (C'4) étant monté en série dans un réseau composé de résistances ohmiques (R1 à R4) et de condensateurs (C5 à C8) et une deuxième bobine de self (L'12) étant montée en série sur la première bobine de self (L'45), l'inductance de la deuxième bobine de self correspondant à l'inductance du transmetteur disposé dans le circuit de blocage (SP1).

4. Dispositif selon la revendication 3, caractérisé par le fait qu'au moins une partie des résistances ohmiques (R1 à R4) et des condensateurs (C5 à C8) qui composent le réseau est réglable.

FIG.1

FIG.2

FIG.3

EP 0 206 188 B1

# FIG.4

EP 0 206 188 B1